# FASCICULE DE BREVET EUROPEEN

(11) **EP 3 381 659 B1**
(45) Date de publication et mention de la délivrance du brevet: **03.06.2020**
(21) Numéro de dépôt: 18160201.2
(22) Date de dépôt: 06.03.2018
(51) Int. Cl.: B29C 64/153, B29C 64/20, B33Y 30/00, B33Y 50/02, B22F 3/105, B33Y 10/00

(54) **IMPRIMANTE TRIDIMENSIONNELLE**
3D-DRUCKER
THREE-DIMENSIONAL PRINTER

(30) Priorité: 30.03.2017 BE 201705217
(43) Date de publication de la demande: 03.10.2018
(73) Titulaire: SAFRAN AERO BOOSTERS S.A., 4041 Herstal (BE)
(72) Inventeur: SCHUSTER, Laurent, 6997 Erezée (BE); ENGLEBERT, Eric, 4540 Amay (BE)
(74) Mandataire: Gevers Patents

(56) Documents cités:
- WO-A1-2016/026706
- US-A1- 2010 055 895
- US-A1- 2016 279 873

## Description

### Domaine technique

Selon un premier aspect, l'invention concerne une imprimante tridimensionnelle pour fabrication d'une pièce par couches additives. Selon un deuxième aspect, l'invention concerne une méthode d'impression tridimensionnelle.

### Art antérieur

WO2016044876A1 décrit un système d'impression tridimensionnelle dans lequel un flux de poudre localisé est déposé sur une surface de construction. Là, un faisceau énergétique chauffe la poudre et la fait fondre afin de former un objet.
WO2016026706A1 décrit un procédé comprenant les étapes consistant à:
a) fournir du matériau de construction; et b) faire fondre le matériau de construction en utilisant un faisceau lumineux ; dans lequel les étapes a) et
b) sont effectuées de manière à produire progressivement un objet à partir du matériau de construction fondu.
US2010055895 décrit des procédés permettant de former une structure électriquement conductrice de forme tridimensionnelle sur une surface sensiblement plane d'un substrat. De la matière particulaire est déposée couche par couche et collée à des régions sélectionnées sur la surface du substrat.
US2016279873 décrit un procédé de fabrication d'un objet tridimensionnel grâce à la fabrication de couches additives, comprenant la fourniture de couches de matériau en poudre superposées sur un support et l'irradiation sélective de chaque couche avec un faisceau laser ou un faisceau de particules.

Les inventeurs ont observé des explosions et des émissions de fumées lors de l'utilisation d'un système d'impression tridimensionnelle dans lequel un flux de poudre localisé est déposé sur une surface de construction.

Ces explosions et émissions de fumée sont une source de danger. En outre, elles obligent à interrompre l'impression tridimensionnelle, ce qui fait perdre du temps de production, et la pièce en cours d'impression est perdue.

### Résumé de l'invention

Un des buts de l'invention est de fournir un système d'impression tridimensionnelle dans lequel un flux de poudre localisé est déposé sur une surface de construction et présentant un risque moindre d'explosion et d'émission de fumée.

A cet effet, selon un premier aspect, l'invention propose une imprimante tridimensionnelle pour fabrication d'une pièce par couches additives et comprenant:
- une surface de construction,
- un moyen d'alimentation agencé de façon à fournir un flux de poudre à la surface de construction et comprenant un premier tuyau d'alimentation débouchant sur la surface de construction,
- un moyen pour envoyer un faisceau énergétique sur la surface de construction,
- un moyen de déplacement pour générer un mouvement relatif de la surface de construction et du moyen d'alimentation,
caractérisée en ce qu'elle comprend en outre un détecteur de charge électrostatique agencé pour mesurer une caractéristique d'une charge électrostatique dudit flux de poudre.

Les inventeurs ont pu attribuer les explosions et émissions de fumée à la charge électrostatique des particules de poudres. Le détecteur de charge électrostatique agencé pour mesurer une caractéristique d'une charge électrostatique dudit flux de poudre permet de déterminer la charge électrostatique de la poudre, ou une caractéristique liée à celle-ci, et d'ainsi pouvoir prendre des mesures pour éviter les explosions et émissions de fumée. Des telles mesures peuvent par exemple comprendre l'arrêt de l'impression et/ou l'émission d'un signal d'alerte.

La caractéristique de la charge électrostatique peut être par exemple la charge électrostatique, la charge électrostatique par unité de temps ou la densité de charge électrostatique du flux de poudre.

Il est intéressant de constater que le document WO2016044876A1 considère la charge électrostatique des particules de poudre comme un avantage. En effet, selon ce document, en chargeant la surface de construction avec une charge opposée à celle des particules de poudre, il est possible d'éviter que les particules de poudre ne roulent sur la surface de construction.

L'invention concerne une imprimante tridimensionnelle, c'est-à-dire une imprimante pour impression à trois dimensions, pour une fabrication de pièces par couches additives (en anglais "additive layer manufacturing").

Dans un mode de réalisation de l'invention, la poudre sort du moyen d'alimentation un peu au-dessus de la surface de construction pendant le mouvement relatif de la surface de construction et du moyen d'alimentation. La poudre est chauffée par le faisceau énergétique juste avant de toucher la surface de construction ou après l'avoir touchée. Sa température augmente et elle s'agglutine avec la matière de la poudre précédemment déposée et chauffée, de façon à former un objet.

Au début de la fabrication de l'objet, le premier tuyau d'alimentation fournit la poudre directement sur le dessus de la surface de construction. De préférence, lorsque la première couche de l'objet a été fabriquée, la surface de construction se déplace vers le bas par rapport au premier tuyau d'alimentation, ou celui-ci se déplace vers le haut par rapport à la surface de construction. Le premier tuyau d'alimentation amène alors la poudre à la surface de construction sur la couche de l'objet qui vient d'être imprimée, de façon à continuer la fabrication de l'objet.

Le moyen de déplacement peut déplacer au moins un parmi: la surface de construction, le moyen d'alimentation, une partie du moyen d'alimentation, le premier tuyau d'alimentation et un deuxième tuyau d'alimentation.

Dans un mode de réalisation de l'invention, le moyen d'alimentation est un moyen d'amener de la poudre depuis un réservoir.

Préférentiellement, le moyen d'alimentation fournit le flux de poudre de façon localisée au-dessus de la surface de construction. En outre, de préférence, le faisceau énergétique est capable de faire fusionner la poudre au fur et à mesure qu'elle est fournie par le moyen d'alimentation.

De préférence, le détecteur de charge électrostatique laisse passer l'entièreté du flux de poudre. Il ne comprend par exemple pas de filtre qui bloquerait une partie du flux de poudre.

Dans un mode de réalisation de l'invention, la surface de construction est formée par le dessus d'un plateau de l'imprimante tridimensionnelle.

Avantageusement, le détecteur de charge électrostatique comprend un conduit agencé pour être traversé, au moins partiellement, de préférence totalement, par le flux de poudre. Cela permet que la mesure de la charge n'interrompe pas la fabrication de l'objet car elle n'induit pas de retard dans la circulation du flux de poudre.

Dans un mode de réalisation de l'invention, le conduit comprend une cage, par exemple une cage de Faraday, reliée à un électromètre.

Avantageusement, l'imprimante tridimensionnelle comprend en outre une unité de sortie agencée pour fournir une information sur la caractéristique de la charge électrostatique du flux de poudre mesurée.

L'unité de sortie peut être par exemple un voyant lumineux qui s'allume, émetteur sonore qui s'enclenche si la charge électrostatique ou la charge électrostatique par unité de temps dépasse un seuil prédéterminé ou un dispositif d'affichage qui affiche une donnée déterminée à partir de l'information sur la caractéristique de la charge électrostatique du flux de poudre mesurée.

Avantageusement, l'unité de sortie comprend une sortie vers un dispositif informatique. Grâce à l'unité de sortie, information sur la caractéristique de la charge électrostatique du flux de poudre mesurée est envoyée à ce dispositif informatique. Celui-ci peut alors surveiller la caractéristique de la charge électrostatique du flux de poudre mesurée.

Avantageusement, l'imprimante tridimensionnelle comprend une unité de contrôle connectée électriquement au détecteur de charge électrostatique et agencée pour interrompre une impression réalisée par l'imprimante tridimensionnelle lorsque la caractéristique de la charge électrostatique mesurée remplit une condition prédéterminée. Cela permet d'arrêter l'impression s'il y a un risque d'explosion. La condition prédéterminée peut être, par exemple que la charge totale depuis le début de la fabrication de l'objet dépasse un seuil ou que la densité de charge instantanée dépasse un seuil.

Avantageusement, l'imprimante tridimensionnelle comprend un compteur agencé pour déterminer la charge totale du flux de poudre mesurée depuis une remise à zéro dudit compteur. Cela permet d'éviter que la charge électrostatique accumulée dans l'enceinte d'impression ne dépasse un certain seuil.

Avantageusement, le détecteur de charge électrostatique est agencé pour mesurer une charge électrique par unité de temps du flux de poudre.

Avantageusement, la poudre comprend un métal. La poudre peut être totalement métallique ou comprendre un métal et un non-métal.

Avantageusement, le faisceau énergétique est un faisceau d'électrons ou un faisceau laser. Par exemple, l'imprimante tridimensionnelle peut être de type " fabrication par faisceau d'électrons" (en anglais "electron beam manufacturing").

Avantageusement, le détecteur de charge électrostatique est situé entre le premier tuyau d'alimentation et la surface de construction, de préférence à une extrémité du premier tuyau d'alimentation. Cela permet de ne pas devoir drastiquement modifier une imprimante existante pour implémenter l'invention.

Avantageusement, l'imprimante tridimensionnelle comprend un réservoir de poudre et le détecteur de charge électrostatique est situé entre une partie, ou une extrémité, du premier tuyau d'alimentation débouchant sur la surface de construction et ledit réservoir. En plus ou à la place du premier détecteur de charge électrostatique entre le premier tuyau d'alimentation et la surface de construction, il peut y avoir un détecteur de charge électrostatique situé plus en amont dans la circulation de poudre.

Avantageusement, le moyen d'alimentation comprend un deuxième tuyau d'alimentation débouchant sur la surface de construction, le premier tuyau d'alimentation étant prévu pour amener une première partie du flux de poudre à la surface de construction et le deuxième tuyau d'alimentation étant prévu pour amener une deuxième partie du flux de poudre à la surface de construction. De préférence, la première et la deuxième parties du flux de poudre forment l'entièreté du flux de poudre.

Le moyen d'alimentation peut comprendre trois, quatre ou plus tuyaux d'alimentation débouchant sur la surface de construction, chacun amenant une partie du flux de poudre. De préférence, les tuyaux d'alimentation sont agencés pour que les faisceaux de poudre qui en sortent convergent.

De préférence, le détecteur de charge électrostatique comprend alors une pluralité de parties, chacune des parties étant agencée pour mesurer une caractéristique d'une charge électrostatique d'une partie du flux de poudre. Dans un mode de réalisation de l'invention, il est alors possible de déterminer la caractéristique de la charge électrostatique pour l'entièreté du flux de poudre.

Préférentiellement, le détecteur de charge électrostatique comprend une première partie agencée pour mesurer une caractéristique d'une charge électrostatique de la première partie du flux de poudre et une deuxième partie agencée pour mesurer une caractéristique d'une charge électrostatique de la deuxième partie du flux de poudre.

Préférentiellement, le premier tuyau d'alimentation et le deuxième tuyau d'alimentation se rejoignent en une jonction reliée à un réservoir par un troisième tuyau d'alimentation, le détecteur de charge électrostatique étant agencé pour mesurer le flux de poudre dans ce troisième tuyau d'alimentation. Cela permet d'avoir une mesure centrale en plus ou à la place des mesures dans chacune des parties du flux de poudre.

Selon un deuxième aspect, l'invention propose une méthode d'impression tridimensionnelle par couches additives comprenant les étapes de:
(a) fournir un flux de poudre à une surface de construction par un moyen d'alimentation comprenant un premier tuyau d'alimentation débouchant sur la surface de construction,
(b) déplacer la surface de construction et/ou le moyen d'alimentation pour générer un mouvement relatif de la surface de construction et du moyen d'alimentation,
(c) envoyer un faisceau énergétique sur la surface de construction, caractérisée en ce qu'elle comprend une mesure d'une caractéristique d'une charge électrostatique dudit flux de poudre.

De préférence, la méthode comprend une prise de mesures pour éviter des explosions et émissions de fumée. Les étapes sont de préférence simultanées.

Les avantages mentionnés pour le dispositif s'appliquent mutatis mutandis à la méthode.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 schématise une imprimante tridimensionnelle selon un premier mode de réalisation de l'invention,
- la figure 2 schématise une imprimante tridimensionnelle selon un deuxième mode de réalisation de l'invention, et
- la figure 3 schématise une imprimante tridimensionnelle selon un troisième mode de réalisation de l'invention.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

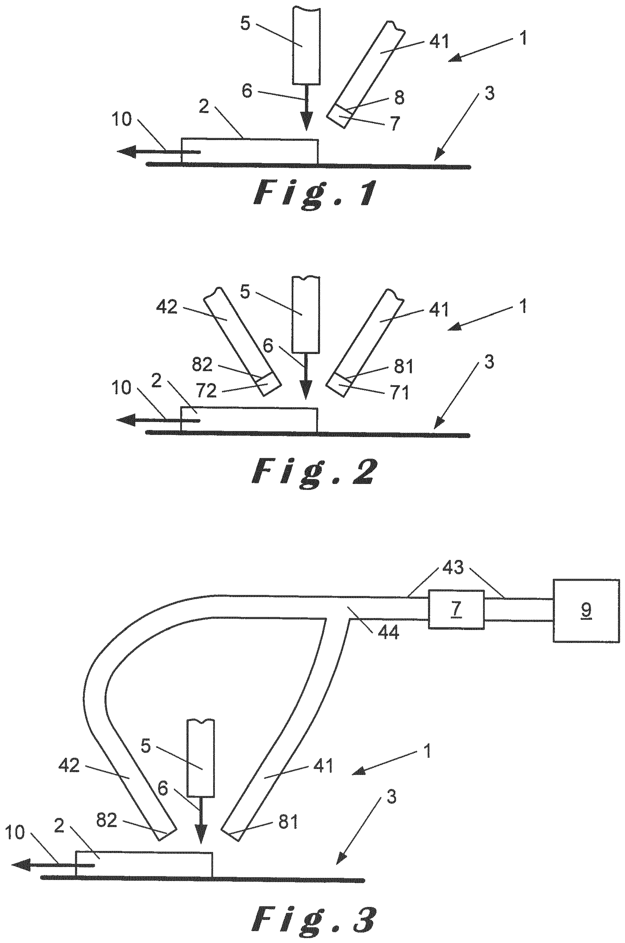

La figure 1 illustre une imprimante tridimensionnelle 1 selon un premier mode de réalisation de l'invention. La figure 2 illustre une imprimante tridimensionnelle 1 selon un deuxième mode de réalisation de l'invention. La figure 3 illustre une imprimante tridimensionnelle 1 selon un troisième mode de réalisation de l'invention.

L'imprimante tridimensionnelle 1 comprend une surface de construction 3, un moyen d'alimentation agencé de façon à fournir un flux de poudre à la surface de construction 3, un moyen 5 pour envoyer un faisceau énergétique 6 sur la surface de construction 3 et un détecteur de charge électrostatique 7,71, 72 agencé pour mesurer une caractéristique d'une charge électrostatique du flux de poudre. L'imprimante tridimensionnelle 1 comprend de préférence une enceinte d'impression (non-illustrée).

L'imprimante tridimensionnelle 1 comprend en outre un moyen de déplacement pour générer un mouvement relatif 10 de la surface de construction 3 et du moyen d'alimentation.

Dans le premier mode de réalisation de l'invention, qui est illustré à la figure 1, le moyen d'alimentation comprend un premier tuyau d'alimentation 41 débouchant sur la surface de construction 3. Le détecteur de charge électrostatique 7 est fixé à une extrémité 8 de ce premier tuyau d'alimentation 41 de façon à ce que le flux de poudre sortant de cette extrémité le traverse.

Dans le deuxième mode de réalisation de l'invention, qui est illustré à la figure 2, le moyen d'alimentation comprend un premier tuyau d'alimentation 41 et un deuxième tuyau d'alimentation 42, tous les deux débouchant sur la surface de construction 3. Le détecteur de charge électrostatique comprend une première partie 71 fixée à une extrémité 81 du premier tuyau d'alimentation 41 de façon à ce que la partie du flux de poudre sortant de cette extrémité 81 le traverse et une deuxième partie 72 fixée à une extrémité 82 du deuxième tuyau d'alimentation 42 de façon à ce que la partie du flux de poudre sortant de cette extrémité 82 le traverse.

Dans le troisième mode de réalisation de l'invention, qui est illustré à la figure 3, le moyen d'alimentation comprend un premier tuyau d'alimentation 41 et un deuxième tuyau d'alimentation 42, tous les deux débouchant sur la surface de construction 3. Le premier tuyau d'alimentation 41 et le deuxième tuyau d'alimentation 42 se rejoignent en une jonction 44. Le moyen d'alimentation comprend en outre un troisième tuyau d'alimentation 43 qui relie fluidiquement la jonction 44 à un réservoir 9. Le détecteur de charge électrostatique 7 est de préférence fixé au troisième tuyau d'alimentation 43 de façon à ce que l'ensemble du flux de poudre le traverse en une seule localisation.

Les caractéristiques des différents modes de réalisation de l'invention sont combinables entre elles. Par exemple, un détecteur de charge électrostatique 7 peut être situé n'importe où sur le premier tuyau d'alimentation 41 lorsqu'il n'y a qu'un seul tuyau d'alimentation. Il est aussi possible que l'imprimante comporte plusieurs détecteur de charge électrostatique 7 situé à différents endroits.

En d'autres termes, l'invention se rapporte à une imprimante tridimensionnelle 1 dans laquelle un flux de poudre localisé est déposé sur une surface de construction 3. L'imprimante tridimensionnelle 1 comprend un détecteur de charge électrostatique 7, 71, 72 pour mesurer une caractéristique d'une charge électrostatique du flux de poudre, par exemple sa charge électrostatique ou sa charge électrostatique par unité de temps. Ce détecteur 7, 71, 72 permet d'éviter les explosions dues à l'accumulation de charge électrostatique.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Imprimante tridimensionnelle (1) pour fabrication d'une pièce (2) par couches additives et comprenant:
• une surface de construction (3),
• un moyen d'alimentation agencé de façon à fournir un flux de poudre à la surface de construction (3) et comprenant un premier tuyau d'alimentation (41) débouchant sur la surface de construction (3),
• un moyen (5) pour envoyer un faisceau énergétique (6) sur la surface de construction (3),
• un moyen de déplacement pour générer un mouvement relatif (10) de la surface de construction (3) et du moyen d'alimentation,
**caractérisée en ce qu'**elle comprend en outre un détecteur de charge électrostatique (7; 71, 72) agencé pour mesurer une caractéristique d'une charge électrostatique dudit flux de poudre.

2. Imprimante tridimensionnelle (1) selon la revendication précédente, **caractérisée en ce que** le détecteur de charge électrostatique (7; 71, 72) comprend un conduit agencé pour être traversé, au moins partiellement, de préférence totalement, par le flux de poudre.

3. Imprimante tridimensionnelle (1) selon l'une quelconque des revendications précédentes, **caractérisée en ce qu'**elle comprend en outre une unité de sortie agencée pour fournir une information sur la caractéristique de la charge électrostatique du flux de poudre mesurée.

4. Imprimante tridimensionnelle (1) selon la revendication précédente, **caractérisée en ce que** l'unité de sortie comprend une sortie vers un dispositif informatique.

5. Imprimante tridimensionnelle (1) selon l'une quelconque des revendications précédentes, **caractérisée en ce qu'**elle comprend en outre une unité de contrôle connectée électriquement au détecteur de charge électrostatique (7; 71, 72) et agencée pour interrompre une impression réalisée par l'imprimante tridimensionnelle (1) lorsque la caractéristique de la charge électrostatique mesurée remplit une condition prédéterminée.

6. Imprimante tridimensionnelle (1) selon l'une quelconque des revendications précédentes, **caractérisée en ce qu'**elle comprend un compteur agencé pour déterminer la charge totale du flux de poudre mesurée depuis une remise à zéro dudit compteur.

7. Imprimante tridimensionnelle (1) selon l'une quelconque des revendications précédentes, **caractérisée en ce que** le détecteur de charge électrostatique (7; 71, 72) est agencé pour mesurer une charge électrique par unité de temps du flux de poudre.

8. Imprimante tridimensionnelle (1) selon l'une quelconque des revendications précédentes, **caractérisée en ce que** la poudre comprend un métal.

9. Imprimante tridimensionnelle (1) selon l'une quelconque des revendications précédentes, **caractérisée en ce que** le faisceau énergétique (6) est un faisceau d'électrons ou un faisceau laser.

10. Imprimante tridimensionnelle (1) selon l'une quelconque des revendications précédentes, **caractérisée en ce que** le détecteur de charge électrostatique (7; 71, 72) est situé entre le premier tuyau d'alimentation (41) et la surface de construction (3), de préférence à une extrémité (8; 81, 82) du premier tuyau d'alimentation (41).

11. Imprimante tridimensionnelle (1) selon l'une quelconque des revendications précédentes, comprenant en outre un réservoir (9) de poudre et **caractérisée en ce que** le détecteur de charge électrostatique (7) est situé entre une partie du premier tuyau d'alimentation (41) débouchant sur la surface de construction (3) et ledit réservoir (9).

12. Imprimante tridimensionnelle (1) selon l'une quelconque des revendications précédentes, **caractérisé en ce que** le moyen d'alimentation comprend un deuxième tuyau d'alimentation (42) débouchant sur la surface de construction (3), le premier tuyau d'alimentation (41) étant prévu pour amener une première partie du flux de poudre à la surface de construction (3) et le deuxième tuyau d'alimentation (42) étant prévu pour amener une deuxième partie du flux de poudre à la surface de construction (3).

13. Imprimante tridimensionnelle (1) selon la revendication précédente, **caractérisé en ce que** le détecteur de charge électrostatique (71, 72) comprend une première partie (71) agencée pour mesurer une caractéristique d'une charge électrostatique de la première partie du flux de poudre et une deuxième partie (72) agencée pour mesurer une caractéristique d'une charge électrostatique de la deuxième partie du flux de poudre.

14. Imprimante tridimensionnelle (1) selon la revendication 12 ou 13, **caractérisé en ce que** le premier tuyau d'alimentation (41) et le deuxième tuyau d'alimentation (42) se rejoignent en une jonction (44) reliée à un réservoir (9) par un troisième tuyau d'alimentation (43), le détecteur de charge électrostatique (7) étant agencé pour mesurer le flux de poudre dans ce troisième tuyau d'alimentation (43).

15. Méthode d'impression tridimensionnelle par couches additives comprenant les étapes de:
(a) fournir un flux de poudre à une surface de construction (3) par un moyen d'alimentation comprenant un premier tuyau d'alimentation (41) débouchant sur la surface de construction (3),
(b) déplacer (10) la surface de construction (3) et/ou le moyen d'alimentation pour générer un mouvement relatif de la surface de construction (3) et du moyen d'alimentation,
(c) envoyer un faisceau énergétique (6) sur la surface de construction (3),
**caractérisée en ce qu'**elle comprend une mesure d'une caractéristique d'une charge électrostatique dudit flux de poudre et une prise de mesures pour éviter des explosions et émissions de fumée.

## Patentansprüche

1. Dreidimensionaler Drucker (1) für die Herstellung eines Teils (2) durch additive Schichten, und der Folgendes umfasst:
• eine Konstruktionsoberfläche (3),
• ein Zuleitungsmittel, das eingerichtet ist, um einen Pulverstrom zu der Konstruktionsoberfläche (3) zu liefern, und das einen ersten Zuleitungsschlauch (41) umfasst, der auf der Konstruktionsoberfläche (3) mündet,
• ein Mittel (5), um einen Energiestrahl (6) auf die Konstruktionsoberfläche (3) zu senden,
• ein Verlagerungsmittel, um eine relative Bewegung (10) der Konstruktionsoberfläche (3) und des Zuleitungsmittels zu erzeugen,
**dadurch gekennzeichnet, dass** er weiter einen Detektor elektrostatischer Ladung (7; 71, 72) umfasst, der eingerichtet ist, um ein Merkmal einer elektrostatischen Ladung des Pulverstroms zu messen.

2. Dreidimensionaler Drucker (1) nach dem vorstehenden Anspruch, **dadurch gekennzeichnet, dass** der Detektor elektrostatischer Ladung (7; 71, 72) auch eine Leitung umfasst, die eingerichtet ist, um mindestens teilweise, bevorzugt vollständig, von dem Pulverstrom durchquert zu sein.

3. Dreidimensionaler Drucker (1) nach einem der vorstehenden Ansprüche, **dadurch gekennzeichnet, dass** er weiter eine Ausgangseinheit umfasst, die eingerichtet ist, um eine Information über das gemessene Merkmal der elektrostatischen Ladung des Pulverstroms zu liefern.

4. Dreidimensionaler Drucker (1) nach dem vorstehenden Anspruch, **dadurch gekennzeichnet, dass** die Ausgangseinheit einen Ausgang zu einer Informatikvorrichtung umfasst.

5. Dreidimensionaler Drucker (1) nach einem der vorstehenden Ansprüche, **dadurch gekennzeichnet, dass** er weiter eine Steuereinheit umfasst, die elektrisch mit dem Detektor elektrostatischer Ladung (7; 71, 72) verbunden und eingerichtet ist, um ein Drucken, das von dem dreidimensionalen Drucker (1) ausgeführt wird, zu unterbrechen, wenn das gemessene Merkmal der elektrostatischen Ladung eine vorbestimmte Bedingung erfüllt.

6. Dreidimensionaler Drucker (1) nach einem der vorstehenden Ansprüche, **dadurch gekennzeichnet, dass** er einen Zähler umfasst, der eingerichtet ist, um die gemessene Gesamtladung des Pulverstroms ab einer Rückstellung auf null des Zählers zu bestimmen.

7. Dreidimensionaler Drucker (1) nach einem der vorstehenden Ansprüche, **dadurch gekennzeichnet, dass** der Detektor elektrischer Ladung (7; 71, 72) eingerichtet ist, um eine elektrische Ladung pro Zeiteinheit des Pulverstroms zu messen.

8. Dreidimensionaler Drucker (1) nach einem der vorstehenden Ansprüche, **dadurch gekennzeichnet, dass** das Pulver ein Metall umfasst.

9. Dreidimensionaler Drucker (1) nach einem der vorstehenden Ansprüche, **dadurch gekennzeichnet, dass** der Energiestrahl (6) ein Elektronenstrahl oder ein Laserstrahl ist.

10. Dreidimensionaler Drucker (1) nach einem der vorstehenden Ansprüche, **dadurch gekennzeichnet, dass** der Detektor elektrischer Ladung (7; 71, 72) zwischen dem ersten Zuleitungsschlauch (41) und der Konstruktionsoberfläche (3), vorzugsweise an einem Ende (8; 81, 82) des ersten Zuleitungsschlauchs (41) liegt.

11. Dreidimensionaler Drucker (1) nach einem der vorstehenden Ansprüche, der weiter einen Pulverbehälter (9) umfasst und **dadurch gekennzeichnet ist, dass** der Detektor elektrostatischer Ladung (7) zwischen einem Teil des ersten Zuleitungsschlauchs (41), der auf der Konstruktionsoberfläche (3) mündet, und dem Behälter (9) liegt.

12. Dreidimensionaler Drucker (1) nach einem der vorstehenden Ansprüche, **dadurch gekennzeichnet, dass** das Zuleitungsmittel einen zweiten Zuleitungsschlauch (42) umfasst, der auf der Konstruktionsoberfläche (3) mündet, wobei der erste Zuleitungsschlauch (41) vorgesehen ist, um einen ersten Teil des Pulverstroms zu der Konstruktionsoberfläche (3) zu bringen, und der zweite Zuleitungsschlauch (42) vorgesehen ist, um einen zweiten Teil des Pulverstroms zu der Konstruktionsoberfläche (3) zu bringen.

13. Dreidimensionaler Drucker (1) nach dem vorstehenden Anspruch, **dadurch gekennzeichnet, dass** der Detektor elektrostatischer Ladung (71, 72) einen ersten Teil (71) umfasst, der eingerichtet ist, um ein Merkmal einer elektrostatischen Ladung des ersten Teils des Pulverstroms zu messen, und einen zweiten Teil (72), der eingerichtet ist, um ein Merkmal einer elektrostatischen Ladung des zweiten Teils des Pulverstroms zu messen.

14. Dreidimensionaler Drucker (1) nach Anspruch 12 oder 13, **dadurch gekennzeichnet, dass** sich der erste Zuleitungsschlauch (41) und der zweite Zuleitungsschlauch (42) an einer Zusammenführung (44) vereinen, die mit einem Behälter (9) durch einen dritten Zuleitungsschlauch (43) verbunden ist, wobei der Detektor elektrostatischer Ladung (7) eingerichtet ist, um den Pulverstrom in diesem dritten Zuleitungsschlauch (43) zu messen.

15. Verfahren zum dreidimensionalen Drucken durch additive Schichten, das folgende Schritte umfasst:
(a) Liefern eines Pulverstroms zu einer Konstruktionsoberfläche (3) durch ein Zuleitungsmittel, das einen ersten Zuleitungsschlauch (41), der auf der Konstruktionsoberfläche (3) mündet, umfasst,
(b) Verlagern (10) der Konstruktionsoberfläche (3) und/oder des Zuleitungsmittels, um eine relative Bewegung der Konstruktionsoberfläche (3) und des Zuleitungsmittels zu erzeugen,
(c) Senden eines Energiestrahls (6) auf die Konstruktionsoberfläche (3),
**dadurch gekennzeichnet, dass** es ein Messen eines Merkmals einer elektrostatischen Ladung des Pulverstroms und ein Erfassen von Maßnahmen zum Vermeiden der Explosionen und Rauchabgaben umfasst.

## Claims

1. Three-dimensional printer (1) for manufacturing a component (2) by additive layers, which printer comprises:
• a construction surface (3),
• a feed means arranged to supply a powder flow to the construction surface (3) and comprising a first feed pipe (41) leading to the construction surface (3),
• a means (5) for transmitting an energy beam (6) to the construction surface (3),
• a movement means for generating a relative movement (10) of the construction surface (3) and the feed means,
**characterised in that** said printer further comprises an electrostatic charge detector (7; 71, 72) arranged to measure a characteristic of an electrostatic charge of said powder flow.

2. Three-dimensional printer (1) according to the preceding claim, **characterised in that** the electrostatic charge detector (7; 71, 72) comprises a duct that is arranged such that at least some, preferably all of the powder flow passes therethrough.

3. Three-dimensional printer (1) according to any of the preceding claims, **characterised in that** said printer further comprises an output unit arranged to provide information about the measured characteristic of the electrostatic charge of the powder flow.

4. Three-dimensional printer (1) according to the preceding claim, **characterised in that** the output unit comprises an output to a computing device.

5. Three-dimensional printer (1) according to any of the preceding claims, **characterised in that** said printer further comprises a control unit that is electrically connected to the electrostatic charge detector (7; 71, 72) and is arranged to halt a printing process being carried out by the three-dimensional printer (1) when the measured characteristic of the electrostatic charge meets a predetermined condition.

6. Three-dimensional printer (1) according to any of the preceding claims, **characterised in that** said printer comprises a counter arranged to determine the total charge of the powder flow measured since the counter was reset.

7. Three-dimensional printer (1) according to any of the preceding claims, **characterised in that** the electrostatic charge detector (7; 71, 72) is arranged to measure an electric charge per unit of time of the powder flow.

8. Three-dimensional printer (1) according to any of the preceding claims, **characterised in that** the powder comprises a metal.

9. Three-dimensional printer (1) according to any of the preceding claims, **characterised in that** the energy beam (6) is an electron beam or a laser beam.

10. Three-dimensional printer (1) according to any of the preceding claims, **characterised in that** the electrostatic charge detector (7; 71, 72) is positioned between the first feed pipe (41) and the construction surface (3), preferably at one end (8; 81, 82) of the first feed pipe (41).

11. Three-dimensional printer (1) according to any of the preceding claims, further comprising a powder container (9) and **characterised in that** the electrostatic charge detector (7) is positioned between a portion of the first feed pipe (41) leading to the construction surface (3) and said container (9).

12. Three-dimensional printer (1) according to any of the preceding claims, **characterised in that** the feed means comprises a second feed pipe (42) leading to the construction surface (3), the first feed pipe (41) being provided for transporting a first portion of the powder flow to the construction surface (3) and the second feed pipe (42) being provided for transporting a second portion of the powder flow to the construction surface (3).

13. Three-dimensional printer (1) according to the preceding claim, **characterised in that** the electrostatic charge detector (71, 72) preferably comprises a first portion (71) arranged to measure a characteristic of an electrostatic charge of the first portion of the powder flow and a second portion (72) arranged to measure a characteristic of an electrostatic charge of the second portion of the powder flow.

14. Three-dimensional printer (1) according to either claim 12 or claim 13, **characterised in that** the first feed pipe (41) and the second feed pipe (42) meet at a junction (44) that is connected to a container (9) by a third feed pipe (43), the electrostatic charge detector (7) being arranged to measure the powder flow in said third feed pipe (43).

15. Method for three-dimensionally printing by additive layers, comprising the steps of:
(a) supplying a powder flow to a construction surface (3) via a feed means comprising a first feed pipe (41) leading to the construction surface (3),
(b) moving (10) the construction surface (3) and/or the feed means in order to generate a relative movement of the construction surface (3) and the feed means,
(c) transmitting an energy beam (6) to the construction surface (3),
**characterised in that** said method comprises measuring a characteristic of an electrostatic charge of said powder flow and taking measures to prevent explosions and smoke emission.
